# EUROPÄISCHE PATENTSCHRIFT

(11) **EP 2 622 162 B1**
(45) Veröffentlichungstag und Bekanntmachung des Hinweises auf die Patenterteilung: **12.08.2015**
(21) Anmeldenummer: 11763627.4
(22) Anmeldetag: 22.09.2011
(51) Int. Cl.: E05F 15/652

(54) **MODULARER TÜRANTRIEB**
MODULAR DOOR DRIVE
ENTRAÎNEMENT DE PORTE MODULAIRE

(30) Priorität: 28.09.2010 DE 202010008648 U
(43) Veröffentlichungstag der Anmeldung: 07.08.2013
(73) Patentinhaber: Gebr. Bode GmbH & Co. KG, 34123 Kassel (DE)
(72) Erfinder: LINNENKOHL, Lars, 34355 Staufenberg (DE); PELLEGRINI, Andreas, 34295 Edermünde (DE)
(74) Vertreter: Patentanwälte Bauer Vorberg Kayser
(86) Internationale Anmeldenummer: PCT/EP2011/066525
(87) Internationale Veröffentlichungsnummer: WO 2012/041762

(56) Entgegenhaltungen:
- EP-A1- 0 725 201
- EP-A1- 1 314 626

## Beschreibung

Die Erfindung betrifft eine Antriebsvorrichtung sowie eine Ein/Ausstiegseinrichtungen für ein Personenbeförderungsfahrzeug mit einem linear bewegbar gelagerten Läufer, um einen daran befestigten Türflügel zu bewegen, einen am Läufer oder am Personenbeförderungsfahrzeug befestigten Motor und einem ersten Getriebe zwischen Motor und Läufer, um wenigstens die Linearverschiebung des Läufers zu bewirken.

Derartige Antriebsvorrichtungen sind insbesondere für Fahrgasttüren an Fahrzeugen des öffentlichen Personenverkehrs bekannt. Oftmals sind diese im Bereich der Türrahmen oder Türportale oberhalb einer durch den Rahmen beziehungsweise durch das Portal definierten Durchtrittsöffnung angeordnet. Beispielsweise sind Schwenkschiebetüren in der EP 10 409 79 A2 und der EP 13 146 26 A1 beschrieben. Die darin gezeigten Antriebe eignen sich insbesondere für sogenannte Schwenkschiebetüren, also Ein-/Ausstiegsvorrichtungen bei denen der Türflügel sowohl eine Schwenkbewegung als auch eine Verschiebung entlang der Fahrzeuglängsachse sich Öffnungs- und Schließvorgangs durchführt.

Das in der Regel begrenzte Volumen um die Türöffnung macht die Anordnung der Antriebsvorrichtung schwierig, insbesondere macht jede Einbausituation eine spezifisches Anordnungsverhältnis insbesondere zwischen Motor und dem den Läufer antreibenden Getriebe erforderlich. Meist ist es daher für jede Einbausituation erforderlich, spezifische Komponenten zu fertigen und vorzuhalten. Dies verteuert die Herstellung und Wartung derartiger Antriebsvorrichtungen.

Die Aufgabe der vorliegenden Erfindung besteht somit darin, die Herstellungs- und Lagerhaltungskosten zu reduzieren und insbesondere die Komponentenvielfalt also Diversität zu reduzieren. Diese Aufgabe wird durch eine Antriebsvorrichtung des Anspruchs 1 sowie durch die Ein-/Ausstiegsvorrichtung und das Personenbeförderungsfahrzeug der nebengeordneten Ansprüche gelöst. Vorteilhafte Ausgestaltungen sind jeweils Gegenstand der abhängigen Ansprüche.

Die Erfindung betrifft eine Antriebsvorrichtung für eine Schiebetüre oder Schwenkschiebetür eines Personenbeförderungsfahrzeugs. Die Erfindung ist hinsichtlich der Ausgestaltung der Lagerung und Kinematik der Tür bzw. des Türflügels und bzw. der Anzahl der verwendeten Türflügel nicht eingeschränkt. Die Antriebsvorrichtung weist wenigstens einen wenigstens linear bewegbar gelagerten Läufer, um einen daran befestigten Türflügel zu bewegen, auf. Bevorzugt erfolgt die Bewegungsrichtung in Längsrichtung des Personenfahrzeugs. Bevorzugt ist die Antriebvorrichtung ober- oder unterhalb einer Türöffnung angeordnet. Der Läufer und der Türflügel sind beispielsweise starr miteinander verbunden oder weisen eine gelenkige Verbindung auf.

Erfindungsgemäß umfasst die Antriebvorrichtung ferner einen Motor. Dieser ist entweder am Läufer befestigt, bewegt sich also mit diesem mit, oder ist am Personenbeförderungsfahrzeug befestigt, um gegenüber dem Läufer zu ruhen und so die elektrische Verkabelung gegenüber der zuvor erwähnten, mitbewegten Variante zu vereinfachen. Die Antriebvorrichtung umfasst ferner ein erstes Getriebe zwischen Motor und Läufer, um wenigstens die Linearverschiebung des Läufers zu bewirken. Hinsichtlich dieses Getriebes ist die Antriebsvorrichtung auch nicht eingeschränkt. Es kann sich beispielsweise auch um einen im weiteren nicht beschriebenen Riemen- oder Kettenantrieb für den Läufer handeln.

Die erfindungsgemäße Antriebsvorrichtung zeichnet sich dadurch aus, dass zwischen dem Motor und dem ersten Getriebe wenigstens zwei Befestigungsoptionen, beispielsweise am Personenbeförderungsfahrzeug oder am Läufer vorgesehen sind, die sich in dem Anordnungsverhältnis vom ersten Getriebe und dem Motor unterscheiden. Damit kann vorteilhaft die Anordnung vom ersten Getriebe und Motor je nach Einbausituation variiert werden. Beispielsweise sind mehrere Befestigungsaufnahmen, wie Lagerböcke oder Gewindebohrungen und Dergleichen, für den Motor vorgesehen. Der Motor ist beispielsweise ein Elektromotor. An den Motor kann ferner ein Untersetzungsgetriebe angeflanscht sein.

Erfindungsgemäß weist die Vorrichtung einen Träger auf, an dem die wenigstens zwei Befestigungsoptionen für den Motor vorgesehen sind. Der Träger wird beispielsweise an dem Personenfahrzeug befestigt. Der Träger kann ferner wenigstens eine Führungsschiene oder Führungsstange für den Läufer aufweisen.

Erfindungsgemäß ist in wenigstens einem der Anordnungsverhältnisse eine Antriebswelle des Motors koaxial mit einer an dem Träger gelagerten an dem Träger gelagerten Eingangswelle des ersten Getriebes angeordnet.

Erfindungsgemäß ist in wenigstens einem der Anordnungsverhältnisse die Antriebswelle des Motors parallel zu einer an dem Träger gelagerten Eingangswelle des ersten Getriebes angeordnet. Bevorzugt ist bei diesem Anordnungsverhältnis ein Riemengetriebe, bevorzugt ein Zahnriemengetriebe, zwischen der Achse bzw. Welle und der Antriebswelle des Motors vorgesehen.

Aufgrund der sich daraus ergebenden, besonders kompakten Ausgestaltung kann das erste Getriebe ein Spindelgetriebe mit wenigstens einer jeweils am Läufer befestigten Spindelmutter und eine Spindel auf weigen. Beispielsweise ist die Antriebswelle des Motors in einem der Anordnungsverhältnisse koaxial zur Spindel angeordnet. Dadurch gibt sich eine Antriebvorrichtung in gestreckter Ausgestaltung mit geringer Querausdehnung und vorteilhaft endständigem Motor, was die elektrische Kontaktierung des Motors erleichtert. In dem anderen Anordnungsverhältnis ist die Antriebswelle des Motors parallel zur Spindel ausgerichtet. Dadurch wird vorteilhaft die Längsausdehnung der Antriebsvorrichtung im Wesentlichen nur durch die Länge der Spindel vorgegeben.

Bevorzugt ist eine Kupplung, beispielsweise ein Kreuzgelenk, zwischen dem ersten Getriebe und der Antriebswelle des Motors vorgesehen.

Gemäß einer weiteren Ausgestaltung sind ein Gesperre zur Verriegelung und Entriegelung des Türflügels und ein zweites Getriebe zwischen Motor und Gesperre, um die Verriegelung und/oder Entriegelung zu bewirken, vorgesehen. Die Erfindung ist hinsichtlich des Gesperres nicht eingeschränkt. Beispielsweise handelt es sich um eine Drehfalle und eine mit der Drehfalle zusammenwirkende Sperrklinke. Die Drehfalle wirkt beispielsweise mit einem türflügelseitigen Schließbolzen zusammen. Die Erfindung ist hinsichtlich des zweiten Getriebes ebenfalls nicht eingeschränkt. Bevorzugt handelt es sich um eine Hebelmechanik.

Bevorzugt ist der Motor schwenk- oder drehbeweglich gelagert, wobei eine Dreh- oder Schwenkbewegung des Motors bei Hemmung oder Blockade des ersten Getriebes und/oder Antriebsrichtungswechsel des Motors bewirkt wird, die mittels des zweiten Getriebes auf das Gesperre übertragen wird, um die Verriegelung und/oder Entriegelung des Türflügels zu bewirken. Somit kann durch lediglich einen motorischen Antrieb sowohl die Bewegung des Türflügels als auch dessen Ent- bzw. Verriegelung bewirkt werden.

Die Erfindung betrifft ferner eine Ein-/Ausstiegseinrichtung für ein Personenbeförderungsfahrzeug mit einer Antriebsvorrichtung in einer der zuvor beschriebenen Ausführungsformen und mit wenigstens einem Türflügel.

Die Erfindung betrifft ferner ein Personenbeförderungsfahrzeug, das die vorteilhafte, zuvor erwähnte Ein-/Ausstiegsvorrichtung aufweist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Fig. 1:: eine perspektivische Ansicht einer Ausführungsform der erfindungsgemäßen Antriebsvorrichtung in einem ersten Anordnungsverhältnis von Motor und erstem Getriebe;

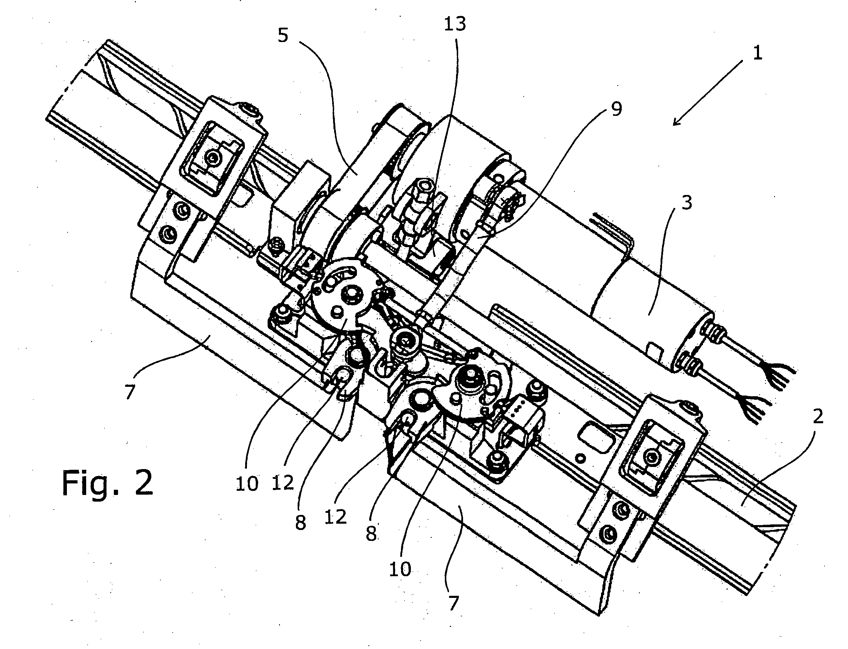

- Fig. 2:: eine perspektivische Detailansicht der in Fig. 1 gezeigten Ausführungsform;
- Fig. 3:: eine perspektivische Ansicht einer Ausführungsform der erfindungsgemäßen Antriebsvorrichtung in einem zweiten Anordnungsverhältnis von Motor und erstem Getriebe;

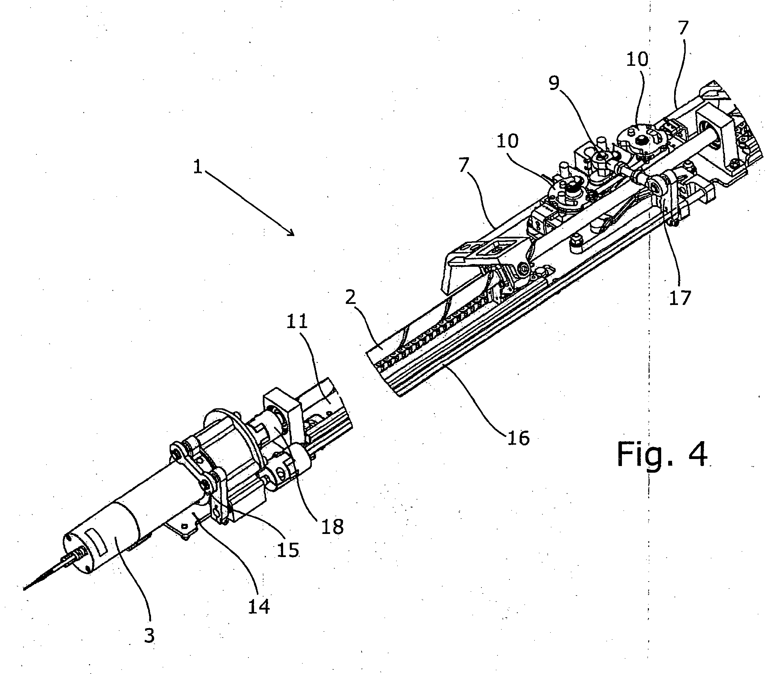

- Fig. 4:: eine perspektivische Detailansicht der in Fig. 3 gezeigten Ausführungsform;
- Fig. 5:: eine Aufsicht auf das zweite Getriebe.

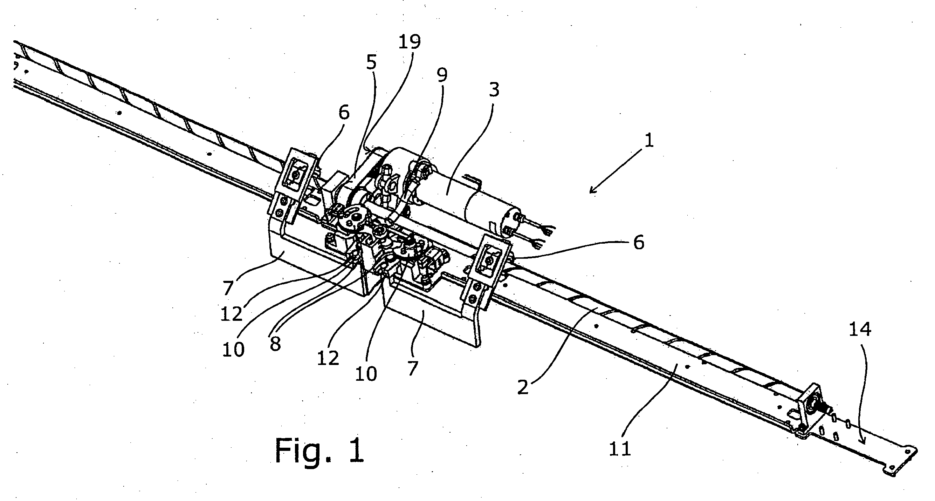

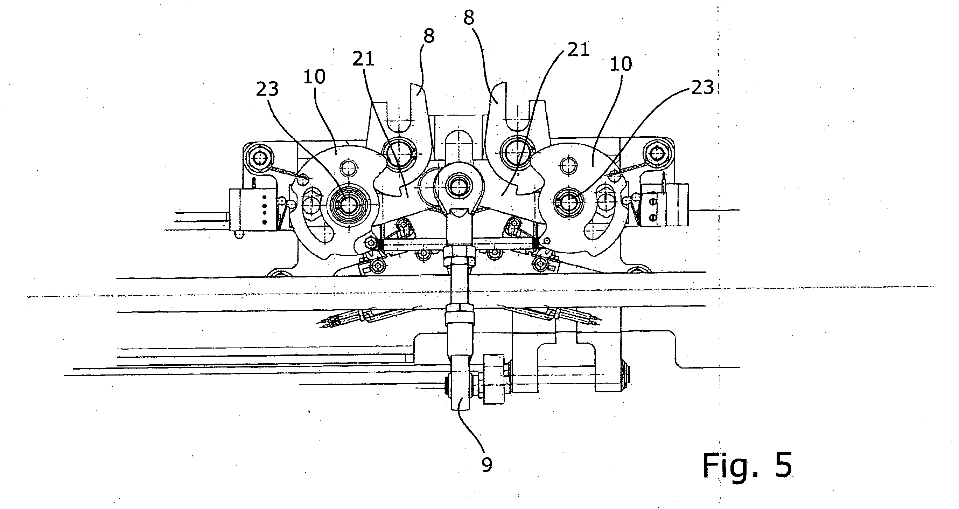

Bei der in Fig. 1 gezeigten Ausführungsform 1 der erfindungsgemäßen Antriebsvorrichtung werden mittels eines Elektromotors 3 und eines ersten Getriebes 5, 2, 6 zwei Läufer 7 linear verschoben. An den Läufern 7 sind nicht dargestellte Türflügel befestigt, die dem Verschließen einer nicht dargestellten Türöffnung dienen. Das erste Getriebe 5, 2, 6 umfasst einen Spindelantrieb 2, 6, wobei eine vom Motor 3 angetriebene und an einem Träger 11 gelagerte Spindel 2 in Rotation versetzt wird und die Spindelmuttern 6 auf der Spindel 2 ablaufen und sich je nach Drehrichtung der Spindel 2 in eine der Axialrichtung der Spindel 2 bewegen. Die Läufer 7 sind an den Spindelmuttern 6 befestigt und werden von diesen mitgenommen. Es ist eine kardanische Lagerung der Spindelmuttern 6 an den Läufern 7 vorgesehen. In dem in Fig. 1 dargestellten Anordnungsverhältnis zwischen dem Motor 3 und dem ersten Getriebe 5, 2, 6 ist die Antriebswelle 19 des Motors parallel zu einer Achse bzw. Welle des ersten Getriebes 5, 2, 6, hier der Achse der Spindel 2, angeordnet. Für dieses Anordnungsverhältnis ist eine Befestigungsoption 13 in Form eines Lagerbocks an dem Träger 11 vorgesehen. Zur Übertragung der Antriebskraft des Motors 3 auf die Spindel 2 umfasst das erste Getriebe ferner ein Zahnriemengetriebe 5. Es ist ferner ein zweites Getriebe 9, 10, 21 vorgesehen, das ein Verriegeln und Entriegeln der Läufer 7 bewirkt, und im Detail in Fig.5 dargestellt ist. Dazu sind an den Läufern 7 Schließbolzen 12 vorgesehen, die jeweils mit einem zugehörige Drehfallen 8 und Sperrklinken 21 umfassenden Gesperre zusammenwirken, um die Verriegelung zu bewirken.

Das zweite Getriebe umfasst eine Hebelmechanik aus einer Schub- bzw. Zugstange 9, die ein Entriegeln der Sperrklinken 21 bewirkt. Ebenso ist es möglich, über die Hebelscheiben 10 die Drehfallen 8 zu entriegeln. Die Sperrklinken 21 und die Hebelscheiben sitzen auf einer gemeinsamen Welle 23. Der Motor 3 ist schwenkbeweglich gelagert. Bei einer Hemmung oder dem Blockieren des ersten Getriebes 5, 2, 6 beispielsweise beim Erreichen der Endstellungen der Türflügel wird das Verschwenken in eine der Endstellungen des Motors 3 bewirkt. Beim Wechsel der Antriebsrichtung wird ein Zurückschwenken bewirkt. Dieses Hinund Herverschwenken kann wiederum ein Ent- bzw. Verriegeln des Gesperres bewirken, wobei dieses Verschwenken durch die Schub- bzw. Zugstange 9 auf das Gesperre übertragen wird.

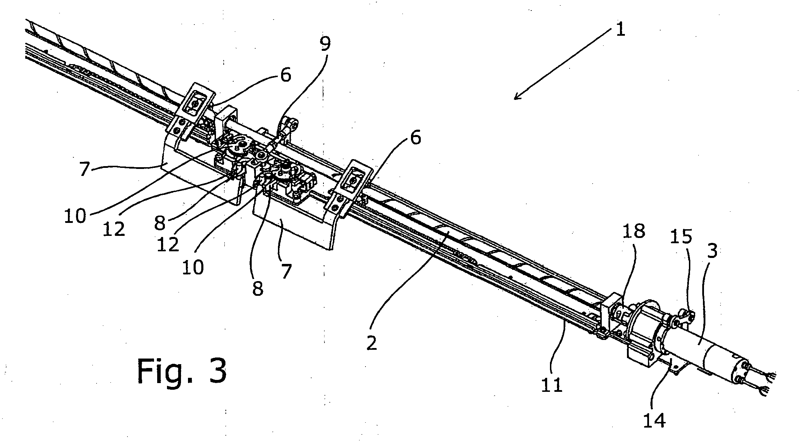

Aus der Fig. 1 bereits ersichtlich ist an dem Träger 11, der mit nicht dargestellten Haltern an dem ebenfalls nicht dargestellten Personenbeförderungsfahrzeug zu befestigen ist, ferner eine weitere Befestigungsoption 14 für den Motor 3 vorgesehen. Wie in Figur 3 gezeigt, erlaubt diese Befestigungsoption 14 in Form von mehreren Gewindebohrungen ein zweites Anordnungsverhältnis von Motor 3 und erstem Getriebe 2, 6, nämlich eine endständige Montage des Elektromotors 3 an einem Ende der Spindel 2, wobei die Antriebswelle des Motors 3 koaxial mit der Achse der Spindel 2 angeordnet ist und mit dieser über die Kupplung 18 verbunden ist. Der Motor 3 ist hier drehbeweglich gelagert. Dessen Drehung, die bei Hemmung oder Blockage des ersten Getriebes oder bei Antriebsrichtungswechsel des Motors 3 bewirkt wird, wird über den Hebel 15, die Welle 16 den Hebel 17, die Schub- bzw. Zugstange 9 auf das Gesperre übertragen, um ein Entriegeln der Sperrklinken 21 und damit der Drehfallen 8 durch den Motor 3 zu bewirken. Durch die beiden Befestigungsoptionen 13, 14 am Träger 11 kann je nach Einbausituation das Anordnungsverhältnis gewählt werden, ohne hierzu spezifische Komponenten wählen und insbesondere austauschen zu müssen. Es müssen allenfalls Komponenten ergänzt werden. Deren ansonsten erforderlich hohe Diversität wird vorteilhaft verringert.

## Patentansprüche

1. Antriebsvorrichtung (1) für eine Schiebetüre oder Schwenkschiebetür eines Personenbeförderungsfahrzeugs, aufweisend wenigstens einen wenigstens linear bewegbar gelagerten Läufer (7), um einen daran befestigten Türflügel zu bewegen, einen am Läufer (7) oder am Personenbeförderungsfahrzeug befestigten Motor (3) und einem ersten Getriebe (2, 5, 6) zwischen Motor (3) und Läufer (7), um wenigstens die Längsverschiebung des Läufers (7) zu bewirken, **dadurch gekennzeichnet, dass** zwischen dem Motor (3) und dem ersten Getriebe wenigstens zwei Befestigungsoptionen (13, 14) vorgesehen sind, die sich in dem Anordnungsverhältnis von erstem Getriebe (2, 5, 6) und Motor (3) unterscheiden, durch einen Träger (11), an dem die wenigstens zwei Befestigungsoptionen (13, 14) für den Motor (3) vorgesehen sind, wobei in wenigstens einem der Anordnungsverhältnisse eine Antriebswelle (19) des Motors (3) koaxial mit einer an dem Träger gelagerten Eingangswelle (2) des ersten Getriebes (2, 6) angeordnet ist und wobei in wenigstens einem der Anordnungsverhältnisse die Antriebswelle (19) des Motors parallel zu einer an dem Träger gelagerten Eingangswelle (2) des ersten Getriebes (2, 5, 6) angeordnet ist.

2. Antriebsvorrichtung (1) gemäß dem vorhergehenden Anspruch, wobei ein Riemengetriebe (5) zwischen der Achse beziehungsweise Welle (2) und der Antriebswelle (19) des Motors (3) vorgesehen ist.

3. Antriebsvorrichtung (1) gemäß einem der vorhergehenden Ansprüche, wobei das erste Getriebe (2, 5, 6) ein Spindelgetriebe mit wenigstens einer jeweils am Läufer befestigten Spindelmutter (6) und eine Spindel (2) aufweist.

4. Antriebsvorrichtung (1) gemäß einem der vorhergehenden Ansprüche, wobei eine Kupplung (18) zwischen dem ersten Getriebe (2, 6) und dem Motor (3) vorgesehen ist.

5. Antriebsvorrichtung (1) gemäß einem der vorhergehenden Ansprüche, wobei ein Gesperre (8, 21) zur Verriegelung und Entriegelung des Türflügels und ein zweites Getriebe (9, 15, 16, 17) zwischen Motor (3) und Gesperre (8, 21), um die Verriegelung und/oder Entriegelung durch den Motor (3) zu bewirken, vorgesehen sind.

6. Antriebsvorrichtung (1) gemäß dem vorhergehenden Anspruch, wobei das zweite Getriebe (9, 15, 16, 17)eine Hebelmechanik umfasst.

7. Antriebsvorrichtung (1) gemäß einem der beiden vorhergehenden Ansprüche, wobei der Motor (3) schwenkbeweglich oder verdrehbar gelagert ist und eine Schwenk- oder Drehbewegung des Motors bei Hemmung oder Blockade des ersten Getriebes (2, 5, 6) und/oder Antriebsrichtungswechsel des Motors (3) bewirkt wird, die mittels des zweiten Getriebes (9, 15, 16, 17) auf das Gesperre (8, 21) übertragen wird, um die Entriegelung und/oder Verriegelung des Türflügels zu bewirken.

8. Ein-/Ausstiegseinrichtung für ein Personenbeförderungsfahrzeug, **gekennzeichnet durch** eine Antriebsvorrichtung (1) gemäß einem der Ansprüche 1 bis 7 und mit wenigstens einem Türflügel.

9. Personenbeförderungsfahrzeug **gekennzeichnet durch** eine Ein-/Ausstiegseinrichtung gemäß dem vorhergehenden Anspruch.

## Claims

1. A drive device (1) for a sliding door or pivot sliding door of a passenger transportation vehicle, comprising: at least one runner (7) mounted such that it can at least move linearly so as to move a door leaf attached thereto, a motor (3) attached to the runner (7) or to the passenger transportation vehicle, and a first transmission mechanism (2, 5, 6) between the motor (3) and runner (7) so as to cause at least the longitudinal displacement of the runner (7), **characterised in that**, between the motor (3) and the first transmission mechanism, at least two attachment options (13, 14) are provided, which differ in the arrangement relationship of the first transmission mechanism (2, 5, 6) and the motor (3), in a supporting structure (11) on which the at least two attachment options (13, 14) for the motor (3) are provided, wherein, in at least one of the arrangement relationships, a drive shaft (19) of the motor (3) is arranged coaxially with an input shaft (2), which is mounted on the supporting structure, of the first transmission mechanism (2, 6), and wherein, in at least one of the arrangement relationships, the drive shaft (19) of the motor is arranged parallel to the input shaft (2), which is mounted on the supporting structure, of the first transmission mechanism (2, 5, 6).

2. The drive device (1) according to the preceding claim, wherein a belt transmission (5) is provided between the axis or shaft (2) and the drive shaft (19) of the motor (3).

3. The drive device (1) according to any one of the preceding claims, wherein the first transmission mechanism (2, 5, 6) has a spindle transmission with at least one spindle nut (6) in each case attached to the runner, and a spindle (2).

4. The drive device (1) according to any one of the preceding claims, wherein a coupling (18) is provided between the first transmission mechanism (2, 6) and the motor (3).

5. The drive device (1) according to any one of the preceding claims, wherein a locking mechanism (8, 21) is provided for locking and unlocking the door leaf, and a second transmission mechanism (9, 15, 16, 17) is provided between the motor (3) and the locking mechanism (8, 21) so as to cause the locking and/or unlocking by means of the motor (3).

6. The drive device (1) according to the preceding claim, wherein the second transmission mechanism (9, 15, 16, 17) comprises a lever mechanism.

7. The drive device (1) according to any one of the two preceding claims, wherein the motor (3) is mounted pivotably or rotatably, and a pivoting or rotary movement of the motor is caused in the event of the first transmission mechanism (2, 5, 6) being jammed or blocked and/or of a change of drive direction of the motor (3), which movement is transferred by means of the second transmission mechanism (9, 15, 16, 17) onto the locking mechanism (8, 21) so as to cause the locking and/or unlocking of the door leaf.

8. An entry/exit facility for a passenger transport vehicle, **characterised by** a drive device (1) according to any one of the claims 1 to 7, and with at least one door leaf.

9. A passenger transport vehicle, **characterised by** an entry/exit facility according to the preceding claim.

## Revendications

1. Dispositif d'entraînement (1) pour une porte coulissante ou porte coulissante pivotante d'un véhicule de transport de personnes, comprenant au moins un curseur (7) qui est logé au moins de manière à être linéairement déplaçable afin de déplacer un vantail de porte fixé sur celui-ci, un moteur (3) fixé sur ledit curseur (7) ou sur le véhicule de transport de personnes et une première transmission (2, 5, 6) entre ledit moteur (3) et ledit curseur (7) afin de provoquer au moins le déplacement longitudinal du curseur (7), **caractérisé par le fait que** deux options de fixation (13, 14) au moins sont prévues entre le moteur (3) et la première transmission, qui se distinguent l'une de l'autre quant au rapport de disposition de la première transmission (2, 5, 6) et du moteur (3), par un support (11) sur lequel sont prévues lesdites au moins deux options de fixation (13, 14) pour le moteur (3), dans lequel, dans au moins l'un des rapports de disposition, un arbre d'entraînement (19) du moteur (3) est disposé de façon coaxiale avec un arbre d'entrée (2) de la première transmission (2, 6), qui est logé sur ledit support, et dans lequel, dans au moins l'un des rapports de disposition, ledit arbre d'entraînement (19) du moteur est disposé parallèlement à un arbre d'entrée (2) de la première transmission (2, 5, 6), qui est logé sur ledit support.

2. Dispositif d'entraînement (1) selon la revendication précédente, dans lequel une commande à courroie (5) est prévue entre l'axe ou bien l'arbre (2) et l'arbre d'entraînement (19) du moteur (3).

3. Dispositif d'entraînement (1) selon l'une quelconque des revendications précédentes, dans lequel la première transmission (2, 5, 6) présente une commande à broche ayant au moins un écrou de broche (6) fixé respectivement sur le curseur, et une broche (2).

4. Dispositif d'entraînement (1) selon l'une quelconque des revendications précédentes, dans lequel un accouplement (18) est prévu entre la première transmission (2, 6) et le moteur (3).

5. Dispositif d'entraînement (1) selon l'une quelconque des revendications précédentes, dans lequel un dispositif d'encliquetage (8, 21) destiné à verrouiller et à déverrouiller le vantail de porte ainsi qu'une deuxième transmission (9, 15, 16, 17) entre le moteur (3) et le dispositif d'encliquetage (8, 21), destinée à provoquer le verrouillage et/ou le déverrouillage par le moteur (3) sont prévus.

6. Dispositif d'entraînement (1) selon la revendication précédente, dans lequel la deuxième transmission (9, 15, 16, 17) comprend une mécanique à levier.

7. Dispositif d'entraînement (1) selon l'une quelconque des deux revendications précédentes, dans lequel le moteur (3) est logé de manière à être mobile en pivotement ou à pouvoir être tourné et un mouvement de pivotement ou de rotation du moteur est provoqué lorsque la première transmission (2, 5, 6) est arrêtée ou bloquée et/ou lors d'un changement de direction d'entraînement du moteur (3), qui est transmis au moyen de la deuxième transmission (9, 15, 16, 17) au dispositif d'encliquetage (8, 21) afin de provoquer le déverrouillage et/ou verrouillage du vantail de porte.

8. Dispositif de montée/descente pour un véhicule de transport de personnes, **caractérisé par** un dispositif d'entraînement (1) selon l'une quelconque des revendications 1 à 7 et avec au moins un vantail de porte.

9. Véhicule de transport de personnes, **caractérisé par** un dispositif de montée/descente selon la revendication précédente.
